Europäisches Patentamt

European Patent Office

Office européen des brevets

(11) Publication number: **0 202 729**
A1

# EUROPEAN PATENT APPLICATION

(21) Application number: **86301182.1**

(22) Date of filing: **20.02.86**

(51) Int. Cl.⁴: **B 65 G 17/42**

(30) Priority: **20.02.85 GB 8504377**

(43) Date of publication of application:
**26.11.86 Bulletin 86/48**

(84) Designated Contracting States:
**DE IT NL**

(71) Applicant: **BAKER PERKINS PLC**
**Westfield Road**
**Peterborough Cambridgeshire PE3 6TA(GB)**

(72) Inventor: **Kiddie, Frank Edward**
**32 Lea Gardens**
**Peterborough Cambridgeshire PE3 6BY(GB)**

(74) Representative: **Boutland, John Anthony**
**8, Heatherstone Avenue**
**Hythe Southampton SO4 5LQ(GB)**

(54) Chain conveyor with article-supporting members.

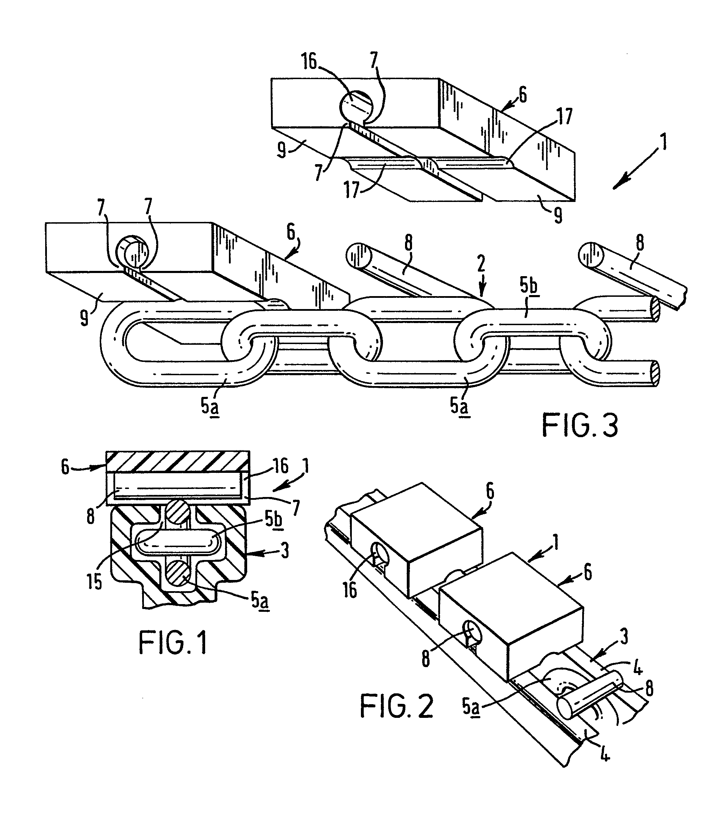

(57) With reference to Figures 1 and 3, a conveyor for bread tins etc. comprises an endless round link chain (2) disposed within a box-like guide track (3) having upwardly-facing surfaces (4) flanking upper portions of alternate links (5a) of the chain (2), and article-support members (6) indirectly attached to the alternate links (5a) by means of jaw portions (7) resiliently gripping the links (5a) by way of rods (8) secured to the links. Each support member (6) has lower surface portions (9) in slidable contact with the upwardly-facing track surfaces (4).

The guide track (3) is of plastics material and is provided with an upper, longitudinally-extending slot (15) allowing free passage of the upper portions of alternate links (5a).

In a modified version, the rods (8) are dispensed with and the article-support members are attached directly to the chain links.

FIG.1

FIG.3

Croydon Printing Company Ltd.

EP 0 202 729 A1

"Improvements in or relating to Conveyors"

BACKGROUND TO THE INVENTION

This invention relates to conveyors and is concerned with conveyors employing endless round link chains, the links taking the form of elongated rings, each having two substantially parallel straight sides interconnected by substantially semi-circular end portions.

Conveyors employing endless round link chains are often used to transport bread tins, baking sheets and trays (hereinafter collectively referred to as "tins"), as well as products. However, contact between the heavy links of the chains and the tins or products can result in damage to the same.

An object of the present invention is to at least reduce the possibility of damage to articles being transported.

SUMMARY OF THE INVENTION

According to the invention, a conveyor comprises an endless round link chain disposed within a guide track flanking upper portions of alternate links of the chain, and article support members attached to said alternate links by means of jaw portions gripping structural parts thereof.

Attachment of an article support member to a link may be direct, whereby jaw portions grip a structural part of the link, or indirect, whereby jaw portions grip a structural extension of the link.

The support member may have lower surface portions in slidable contact with the upwardly-facing track surfaces.

The article support members may be positively secured to the alternate links by use of a strong bonding material.

The invention also comprises any novel subject matter or combination including novel subject matter herein disclosed.

BRIEF DESCRIPTION OF THE DRAWINGS

Embodiments of the invention will now be described by way of example only, with reference to the accompanying drawings, wherein :-

Figure 1 is an end view, in section, of a conveyor,

Figure 2 is a view from above, in perspective, of the conveyor,

Figure 3 is a view from the side and below, again in perspective, and to an enlarged scale,

Figure 4 is a view similar to Figure 3, and illustrates another conveyor,

Figure 5 is an end view, in section, of the conveyor of Figure 4, and

Figures 6 to 12 are views in perspective of modifications.

In the figures, like reference numerals refer to like components.

DETAILED DESCRIPTION OF THE PREFERRED EMBODIMENT

With reference to Figures 1, 2 and 3, a conveyor 1 comprises an endless round link chain 2 disposed within a box-like guide track 3 having upwardly-facing surfaces 4 flanking upper portions of alternate links 5a of the chain 2, and article-support members 6 attached indirectly to the alternate links 5a by means of jaw portions 7 gripping elongate members in the form of rods 8 secured to the links. Each support member 6 has lower surface portions 9 in slidable contact with the upwardly-facing track surfaces 4.

The chain 2, which is of steel, comprises interengaging links 5a and 5b of identical form. Each link comprises an elongated ring, having two substantially straight sides interconnected by substantially semi-circular end portions.

The guide track 3 is of plastics material and is provided with an upper, longitudinally-extending slot 15 allowing free passage of the upper portions, (i.e. the uppermost of each straight side), of alternate links 5a.

The article-support members 6 of this example are of "DELRIN", (Registered Trade Mark), a plastics material, comprising an acetal resin.

The conveyor 1 of this example is used to transport bread tins, although other articles, including bread loaves, may be carried on it. The article-support members 6, which are spaced from each other, serve as platforms in conveying the tins. The plastics material used to form the support members 6 and track 3, ensures that low frictional forces exist between these components and the surfaces 4 over which they slide. The material of the members 6 and track 3 is also

0202729

resilient, has a good resistance to wear, and is non-toxic.

The rods 8, which comprise structural extensions of the chain links 5a, extend laterally of these links and are welded thereto, substantially midway along the lengths of the rods. The link extension rods 8 are received by recesses comprising grooves 16 of part-circular lateral cross-section formed in the article-support members 6. Entry of a rod 8 into a groove 16 is by way of a pair of jaw portions 7 which yield resiliently to allow passage of a rod 8 and thereafter return to their original positions and so hold the rod in place. The grooves 16 and jaw portions 7 thereof can be viewed as "snap-fasteners" which secure a member 6 to a rod 8 and thus to a chain link 5a.

The article-support members 6 are also formed with grooves 17 of substantially semi-circular (lateral) cross-section, which locate the upper portion of a chain link 5a and thus ensure that the member 6 is seated firmly on the link.

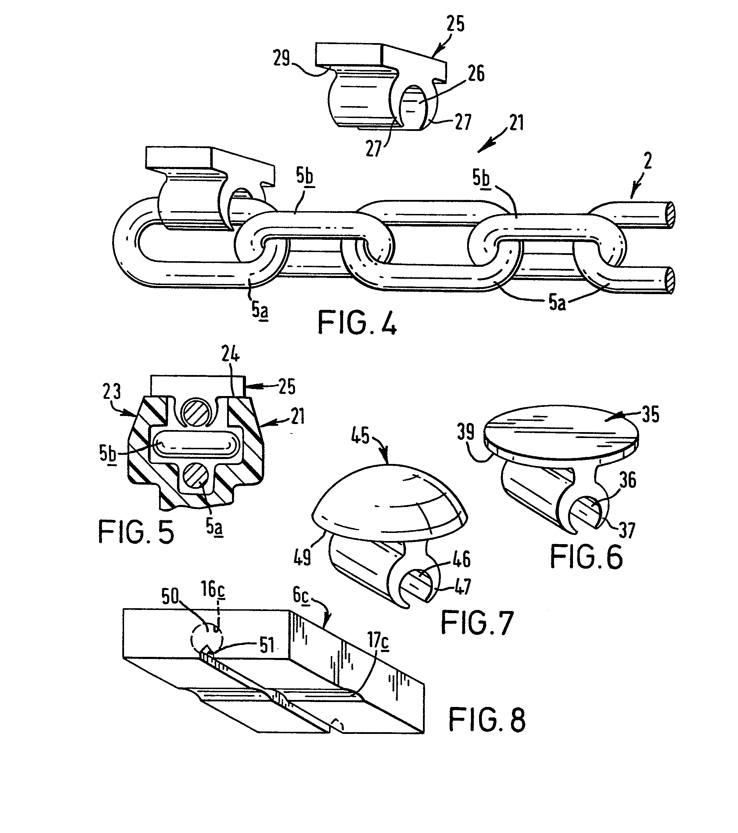

With reference now to Figures 4 and 5, the conveyor 21 illustrated thereby makes use of article-support members 25. The members 25 are attached directly to alternate links 5a by means of jaw portions 27 of part-circular grooves 26, which grip the links in a resilient manner, forming "snap" fasteners. Each support member 25 has lower surface portions 29 in slidable contact with upwardly-facing surfaces 24 of the track 23. The surfaces 24 may be dispensed with if the members 25 are positively secured to the links 5a by use of a strong bonding material.

The technique of bonding an article-support member to a link is not limited to the conveyor of Figures 4 and 5 and may be employed with other support member/chain link combinations of this disclosure.

Figures 6 and 7 illustrate further forms of article-support members, namely members 35 and 45 respectively. Grooves 36 and 46, jaw portions 37 and 47, and surfaces 39 and 49, correspond to grooves 26, jaw portions 27 and surfaces 29 of Figure 4. Member 35 has a substantially flat upper surface. Member 45 has a domed upper surface.

Figure 8 illustrates a modification wherein opposite ends of a groove 16c of an article-support member 6c are partially closed by end walls 50. The end walls 50 serve to limit axial movement of a rod 8 within its locating groove 16c.

The end walls 50, which are integral with the article-support member 6c, have segment-like cut-away portions 51 which allow the member 6c to remain resilient.

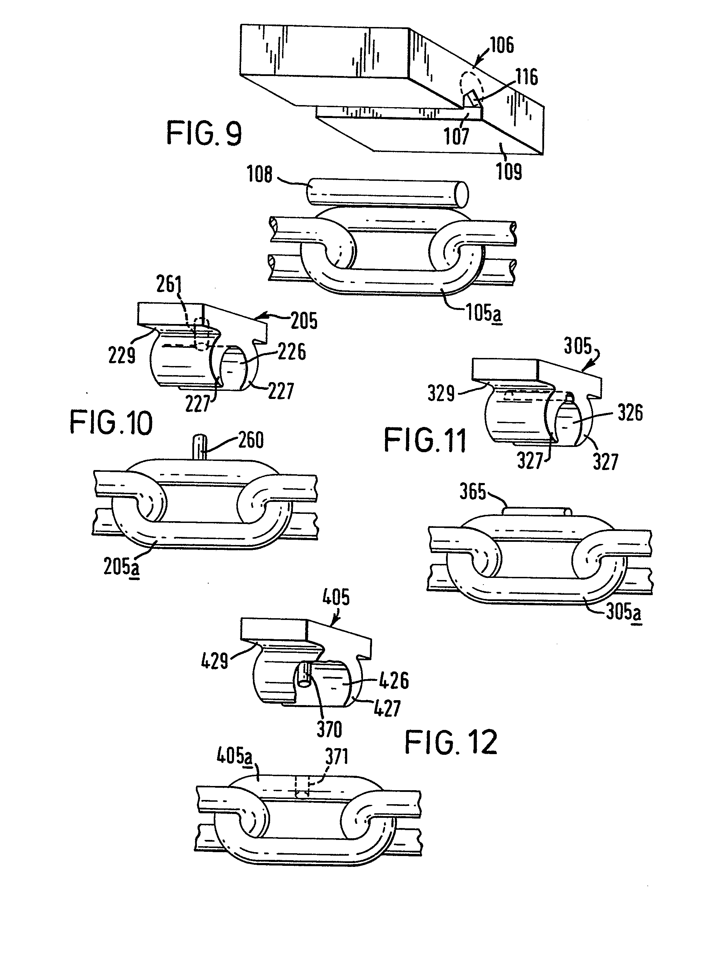

With reference to Figure 9, which is a modification of the Figure 3 conveyor, the rods 8 and grooves 16 of Figure 3 are, in effect, reorientated whereby rods 108 now extend longitudinally along the upper sides of links 105a, and grooves 17 (Figure 3) are dispensed with.

The modification of Figure 9 results in the article-support members 106 being attached directly to the links 105a, by means of the jaw portions 107 gripping the rods 108 secured to the upper sides of the links.

Figures 10, 11 and 12 illustrate modifications of the conveyor of Figure 4.

With reference to Figure 10, a spigot 260 extends upwardly from each chain link 205a. The spigot 260 is located by a socket 261 formed in the article-support member. 205.

Figure 11 illustrates a similar modification, wherein a rib 365 extends longitudinally along the upper sides of each link 305a. Each rib 365 is located by a cooperating groove 366 formed in the associated article-support member 305.

The modifications of Figures 9, 10 and 11 comprise arrangements wherein extension members (108, 260, 365) are secured to links 105a etc. and the associated article-support members are formed with cooperating recesses (116, 261, 366) for receiving the extension members.

Figure 12 illustrates an arrangement which, in effect, is a reversal of that shown by Figure 10. In Figure 12, each article-support member 405 carries a downwardly-extending spigot 370 which is located by a socket 371 formed in the upper side of each associated link 405a.

Where possible, one or more features of one conveyor disclosed herein may be substituted for one or more features of another conveyor of the disclosure.

A pair of endless chains, each carrying a plurality of article-support members, may be employed. However, a single chain can be used if wider support members are provided.

The conveyor chain(s) are driven by conventional means, (not shown), for example, by wheels, which in turn are driven by sprocket chain drives rotated by electric motors.

The invention allows chains to change direction and negotiate corners without undue difficulty.

## C L A I M S

1.   A conveyor comprising an endless round link chain, <u>characterised</u> <u>in that</u> the chain (2) is disposed within a guide track (3) flanking upper portions of alternate links (5a) of the chain, and article-support members (6) attached to said alternate links by means of jaw portions (7) gripping structural parts thereof.

2.   A conveyor as claimed in Claim 1, <u>characterised in that</u> the article-support members (6) are attached to the alternate links (5a) in a direct manner.

3.   A conveyor as claimed in Claim 1, <u>characterised in that</u> the article-support members (6) are attached to the alternate links (5a) in an indirect manner (rods 8).

4.   A conveyor as claimed in Claim 1, 2 or 3, <u>characterised in that</u> the structural parts of the links comprise extension members (8, 108, 260, 365) secured to the links and the article-support members (6 etc.) are formed with cooperating recesses (16, 116, 261, 366) for receiving the extension members.

5.   A conveyor as claimed in Claim 1 or 2, <u>characterised in that</u> extension members (370) are secured to the article-support members (405), and the links are formed with cooperating recesses (371) for receiving the extension members.

6.   A conveyor as claimed in Claim 4, <u>characterised in that</u> the extension members comprise rods (8) extending laterally of the links (5a).

7.   A conveyor as claimed in Claim 4, <u>characterised in that</u> the extension members comprise rods (108) extending longitudinally of the links (105a).

8. A conveyor as claimed in Claim 4, <u>characterised in that</u> the extension members comprise ribs (365) extending longitudinally of the links (305a̲).

9. A conveyor as claimed in Claim 4, <u>characterised in that</u> the extension members comprise spigots (260) extending upwardly from the links (205a̲).

10. A conveyor as claimed in Claim 5, <u>characterised in that</u> the extension members comprise spigots (370) extending downwardly from the article-support members (405).

11. A conveyor as claimed in any one of Claims 1 to 10, <u>characterised in that</u> the guide track (3, 23) has upwardly-facing surfaces (4, 24) and the support members (6, 25) have lower surface portions (9, 29) in slidable contact with the upwardly-facing track surfaces.

12. A conveyor as claimed in any one of Claims 1 to 11, <u>characterised in that</u> the article-support members (6 etc.) are bonded to the structural parts of the chain links (5a̲ etc.).

<u>Ref: 947 EPO</u>

FIG.3

FIG.1

FIG.2

FIG. 4

FIG. 5

FIG. 7

FIG. 6

FIG. 8

0202729

3 / 3

FIG.9

FIG.10

FIG.11

FIG.12

European Patent Office

**EUROPEAN SEARCH REPORT**

| | **DOCUMENTS CONSIDERED TO BE RELEVANT** | | | EP 86301182.1 |
|---|---|---|---|---|
| Category | Citation of document with indication, where appropriate, of relevant passages | | Relevant to claim | CLASSIFICATION OF THE APPLICATION (Int. Cl.4) |
| Y | DE - B - 1 014 930 (KNAUST)<br>* Column 2, lines 44-48 *<br>-- | | 1,3,4,9 | B 65 G 17/42 |
| Y | DE - B - 1 000 281 (HAUHINCO)<br>* Fig. 2 *<br>-- | | 1 | |
| A | DE - B - 1 060 783 (AHRENS)<br>* Fig. 1 *<br>---- | | 1,2,11,<br>12 | |
| | | | | **TECHNICAL FIELDS SEARCHED (Int. Cl.4)** |
| | | | | B 65 G |
| | The present search report has been drawn up for all claims | | | |

| Place of search | Date of completion of the search | Examiner |
|---|---|---|
| VIENNA | 13-05-1986 | BAUMGARTNER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82